# DEMANDE DE BREVET EUROPEEN

(11) **EP 1 482 620 A1**
(43) Date de publication de la demande: **01.12.2004**
(21) Numéro de dépôt: 04370017.8
(22) Date de dépôt: 28.05.2004
(51) Int. Cl.: H02J 7/00

(54) **Chargeur multiple universel**

(30) Priorité: 30.05.2003 FR 0306572
(71) Demandeur: Tourte, Eric, 59211 santes (FR)
(72) Inventeur: Tourte, Eric, 59211 santes (FR)
(74) Mandataire: Duthoit, Michel

(57) **Abrégé**

L'invention concerne un chargeur électrique à batterie rechargeable, notamment téléphones cellulaires, ordinateurs portables ou autres, comprenant :
- des moyens (1) de branchement à une alimentation électrique,
- des moyens de régulation (14, 14₁, 14₂, 14₃, 14₄) des paramètres de charge d'au moins undit appareil,
- des moyens de distribution (2) de l'énergie électrique à au moins undit appareil, muni de moyens de connexion (40₁, 40₂, 40₃) auxdits moyens de régulation et de moyens de connexion (3, 3') spécifiques ou adaptables à un appareil particulier.

Selon l'invention, lesdits moyens de connexion (40₁, 40₂, 40₃) auxdits moyens de régulation (14, 14₁, 14₂, 14₃, 14₄) présentent en outre des moyens (43) pour spécifier les paramètres nécessaires de la charge d'au moins undit appareil auxdits moyens de régulation en fonction dudit au moins un appareil connecté.

## Description

L'invention concerne un chargeur pour appareil électrique à batterie rechargeable.

Bien que plus particulièrement prévue pour les téléphones cellulaires ou téléphones portables, l'invention s'adapte aisément à d'autres appareils électriques munis d'une alimentation autonome. Il s'agit par exemple d'ordinateurs portables, d'appareils audio et/ou vidéo portables, d'appareils photographiques ou caméscopes, de consoles de jeux électroniques, d'agendas électroniques et similaires, ou autres.

Lorsqu'on acquiert un tel appareil électrique, il est généralement fourni un chargeur spécifique à chaque appareil. Le chargeur est spécifique en ce sens qu'il est muni de moyens de connexion à l'appareil électrique, complémentaires d'un logement pour ces moyens de connexion, prévus sur l'appareil électrique.

Cela étant, tous les utilisateurs d'appareils portables, notamment téléphones portables, ont pu constater que chaque modèle d'appareil électrique est associé à un chargeur spécifique. Ainsi, lorsqu'on dispose par exemple d'un téléphone portable professionnel, d'un téléphone portable personnel, d'un agenda électronique et d'un ordinateur portable, il est nécessaire de transporter quatre chargeurs différents pour pouvoir recharger les batteries de chacun de ces appareils électriques. A cela peut s'ajouter éventuellement des chargeurs pour d'autres appareils domestiques électriques à batteries rechargeables, tels que rasoirs, brosses à dents ou autres.

Ainsi, en déplacement, il est nécessaire de transporter une multitude de chargeurs, lourds et encombrants, occupant de l'espace qui serait autrement disponible, notamment pour du matériel professionnel ou des effets personnels.

Par ailleurs, lorsqu'on oublie l'un de ces chargeurs, à moins d'en acquérir un nouveau ou d'en trouver un dans son entourage, il n'est plus possible de recharger l'appareil électrique dont on a oublié le chargeur, ce qui peut être particulièrement préjudiciable.

Le but de l'invention est de proposer un chargeur pour appareil électrique à batterie rechargeable, qui pallie les inconvénients précités.

En particulier, un but de l'invention est de proposer un chargeur universel, c'est-à-dire qui puisse être utilisé pour recharger divers types et divers modèles d'appareils électriques.

Un autre but de l'invention est de proposer un chargeur multiple, c'est-à-dire qui autorise le chargement de plusieurs appareils électriques simultanément.

D'autres buts et avantages de l'invention apparaîtront au cours de la description qui va suivre, qui n'est donnée qu'à titre indicatif, et qui n'a pas pour but de la limiter.

L'invention concerne un chargeur pour appareil électrique à batterie rechargeable, notamment téléphone cellulaire, ordinateur portable ou autres, comprenant :
- des moyens de branchement à une alimentation électrique,
- des moyens de régulation des paramètres de charge d'au moins undit appareil,
- des moyens de distribution de l'énergie électrique à au moins undit appareil, muni de moyens de connexion auxdits moyens de régulation et de moyens de connexion spécifiques ou adaptables à un appareil particulier,
caractérisé en ce que lesdits moyens de connexion auxdits moyens de régulation présentent en outre des moyens pour spécifier les paramètres nécessaires de la charge d'au moins undit appareil auxdits moyens de régulation en fonction dudit au moins un appareil connecté.

L'invention sera mieux comprise à la lecture de la description, accompagnée des figures en annexe, parmi lesquelles :
- les figures 1 à 3 sont des vues en perspective de trois variantes d'un chargeur conforme à l'invention,
- la figure 4 est une vue de dessus d'un chargeur conforme à l'invention,
- la figure 5 est une vue de dessus de deux chargeurs conformes à l'invention,
- la figure 6 est un schéma de principe du fonctionnement électrique du chargeur conforme à l'invention,
- la figure 7 est un schéma d'un exemple de circuit de régulation de la charge conforme à l'invention,
- la figure 8 est un mode de réalisation d'une connexion simple conforme à l'invention,
- la figure 9 est un mode de réalisation d'une connexion double conforme à l'invention.

Comme illustré aux différentes figures, le chargeur conforme à l'invention comprend des moyens 1 de branchement à une alimentation électrique et au moins des moyens 2 de distribution de l'énergie électrique à au moins un appareil électrique, non illustré.

Selon un mode de réalisation, le chargeur comprend une pluralité de moyens 2 de distribution de l'énergie électrique à une pluralité d'appareils électriques, non illustrés.

Lesdits moyens 1 de branchement à une alimentation électrique peuvent se présenter sous la forme d'une prise 11 que l'on peut brancher sur le secteur électrique.

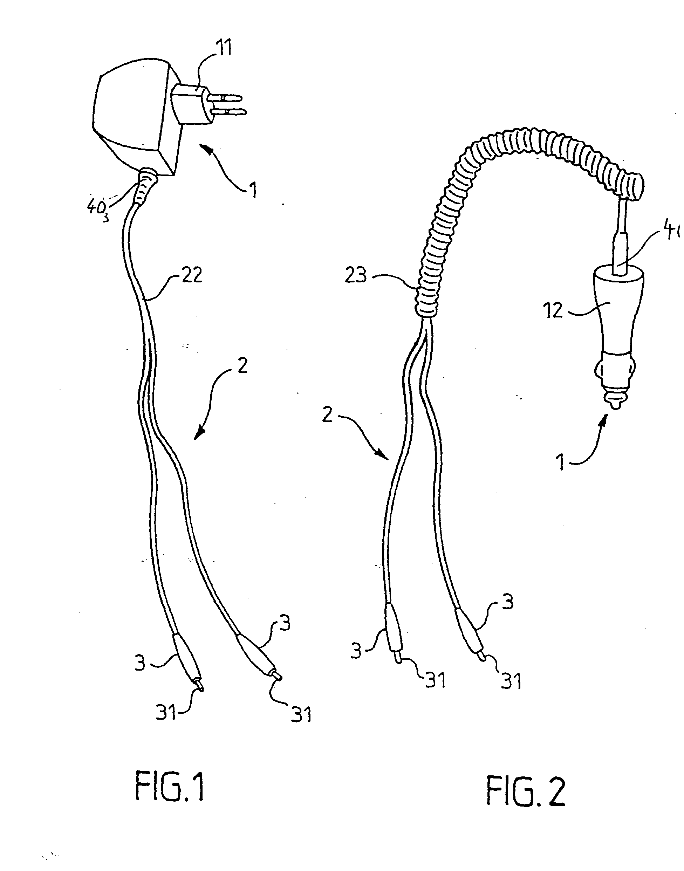

Par exemple, comme illustrée aux figures 1, 3, 4, et 5 ladite prise 11 comprend deux broches mâles aptes à coopérer avec une prise femelle, par exemple murale. L'alimentation est réalisée sous une différence de potentiel variable. En moyenne, il s'agira d'une tension de 220 V en France par exemple, voire de 110 V dans d'autres pays.

Cependant, pour charger l'appareil électrique, la tension de charge doit être transformée et abaissée. Le chargeur présente des moyens 13 pour transformer et abaisser une tension secteur à courant alternatif en une tension abaissée à courant continu 41. Ainsi, le chargeur comprend un transformateur électrique 13 ainsi qu'un circuit de redressement pour fournir un courant continu à partir du courant alternatif. Avantageusement, la tension continue est de 12 ou 24 V.

Les moyens de branchement peuvent également se présenter sous la forme d'une prise 12 type allume-cigares, connue de l'homme du métier, qui utilise comme alimentation électrique le dispositif allume-cigares d'un véhicule automobile.

Selon l'invention, elle est munie en outre de moyens 14 de régulation des paramètres de la charge d'un appareil. Selon un mode de réalisation, les paramètres nécessaires de la charge d'un appareil sont l'intensité nominale et la tension nominale de la charge de la batterie d'undit appareil. Par exemple, pour les téléphones cellulaires, la tension nominale de charge est fixée à 3,7 V.

Les moyens de distribution 2 sont munis de moyens de connexion 3, 3'. Selon une première variante, les moyens de connexion 3 sont spécifiques à un appareil particulier. Selon une autre variante, les moyens de connexion 3' sont adaptables à un appareil particulier.

Les moyens 2 de distribution de l'énergie électrique présentent également des moyens de connexion 40₁, 40₂, 40₃ auxdits moyens de régulation 14₁, 14₂, 14₃, 14₄. Selon l'invention, les moyens de connexion 40₁, 40₂, 40₃ présentent en outre des moyens 43 pour spécifier les paramètres nécessaires de la charge d'au moins undit appareil audit moyen de régulation 14₁, 14₂,14₃, 14₄, en fonction dudit au moins un appareil connecté.

Ainsi, un chargeur conforme à l'invention peut être utilisé pour recharger plusieurs appareils électriques, de types et de modèles différents, en fonction de leurs caractéristiques électriques. Par type d'appareil, on distingue des appareils ayant des usages différents, tels que téléphone portable, ordinateur portable, jeu électronique ou autres. Par modèle d'appareil, on distingue entre eux les appareils d'un même type.

En particulier, les chargeurs illustrés aux figures 1 et 2 peuvent être utilisés pour charger deux appareils identiques, à savoir : même tension et même intensité de charge.

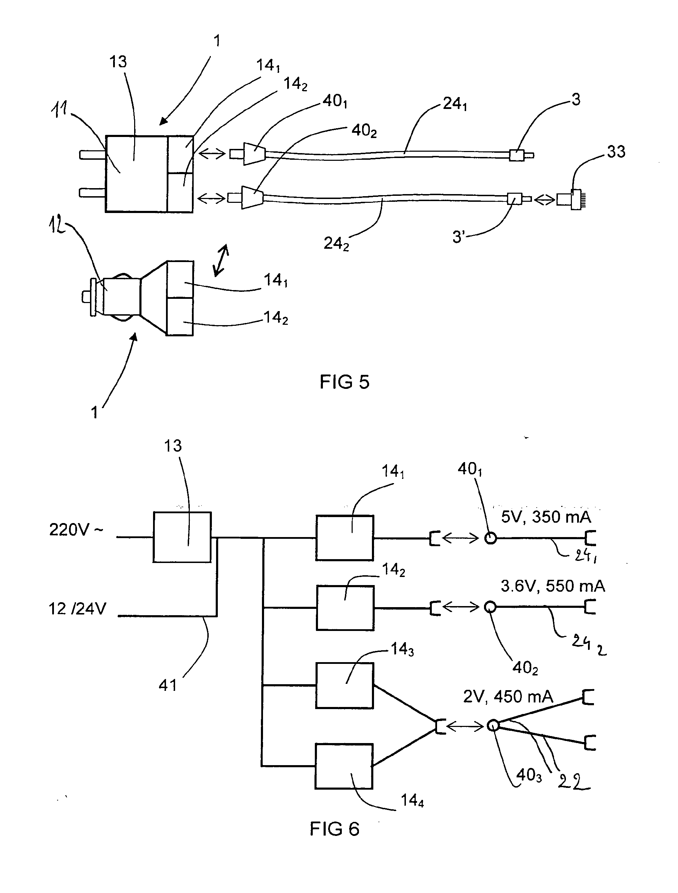

Tel qu'illustré à la figure 6, les deux appareils identiques connectés peuvent partager des mêmes moyens 40₃ de connexion audits moyens de régulation. Les deux appareils sont chargés par deux lignes 46₁, 46₂ d'alimentation électrique indépendantes connectées à deux moyens 14₃, 14₄ de régulation également indépendants. Néanmoins, lesdits même moyens de connexion 40₃ peuvent présenter des moyens 43 communs pour spécifier les caractéristiques de charge pour les deux moyens de régulation 14₃,14₄ tels qu'illustrés à la figure 9.

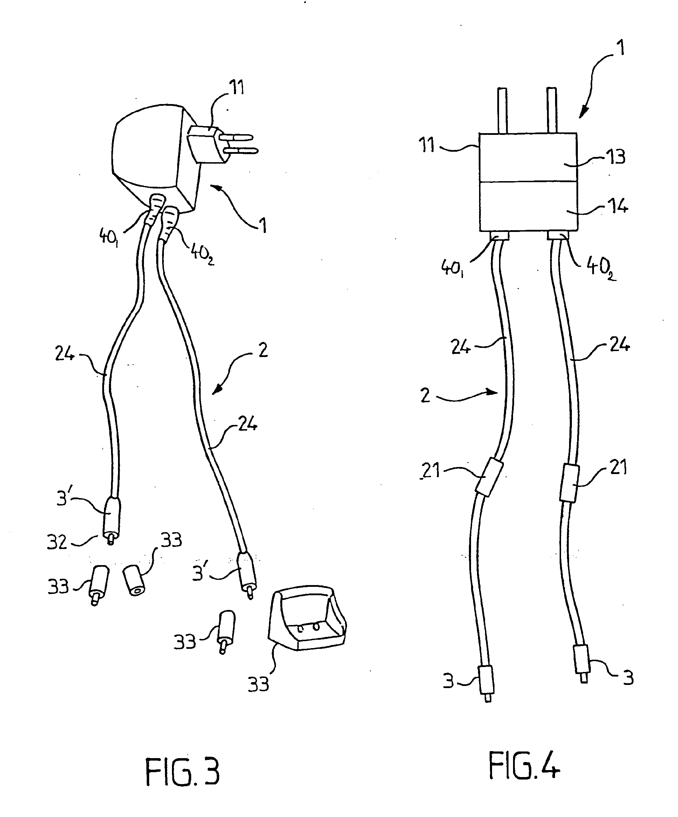

Par contre, les chargeurs, illustrés aux figures 3 et 4, étant munis de moyens 2 de distribution de l'énergie électrique indépendants, peuvent être utilisés pour charger des appareils différents ou identiques.

Tel qu'illustré aux différentes figures, les chargeurs peuvent présenter au moins deux moyens 2 de distribution de l'énergie électrique, mais il est tout à fait envisageable de les munir de plus de deux de ces moyens.

Selon un mode de réalisation, les moyens de distribution 2 sont munis en outre d'un adaptateur d'impédance 21. Un tel adaptateur pourra être constitué d'une résistance et d'une diode pour adapter la puissance de la charge vers la batterie à charger, un tel élément actif pourra être surmoulé sur le fil.

Comme illustré aux figures 1 et 2, les moyens de distribution 2 peuvent se présenter sous la forme d'un cordon électrique 22, 23, muni d'une pluralité de moyens de connexion 3 placés en parallèle. Il s'agira d'un cordon électrique simple 22 ou en spirale 23.

Avantageusement, les cordons électriques 22 et 23 présentent chacun une ligne d'alimentation 46₁, 46₂ électrique indépendante pour chaque moyen de connexion 3. Les moyens de connexion 40₃, bien que partagés aux figures 1 et 2, présentent pour chaque moyen de connexion 3 un port indépendant d'alimentation pour la charge d'un appareil.

Les cordons électriques 22 et 23 étant chacun destiné à charger des appareils identiques, les moyens de connexion 40₃ peuvent partager les mêmes moyens 43 pour spécifier les caractéristiques de la charge aux moyens de régulation.

Selon l'autre variante, les moyens de distribution 2 se présentent sous la forme d'une pluralité de cordons électriques 24, chacun des cordons électriques étant muni d'au moins un moyen de connexion 3, 3'.

Les moyens de connexion se présentent alternativement sous la forme d'un embout 31 spécifique à un appareil particulier ou d'un embout neutre 32 associé à un adaptateur 33 correspondant à un appareil particulier.

Dans ce cas, les moyens 3' de connexion sont adaptables à un appareil électrique particulier.

Suivant la solution retenue, un même chargeur pourra être utilisé pour charger plusieurs appareils du même modèle ou plusieurs appareils de modèles différents ou bien encore n'importe quel appareil pourvu que l'on dispose de l'adaptateur 33 adéquat.

Les moyens de régulation sont constitués pour chaque appareil électrique à batterie rechargeable d'un circuit 14 de régulation de charge d'une batterie. Ainsi, avantageusement, le chargeur présente un circuit de régulation indépendant pour chaque appareil à charger. En effet, une charge en série de deux batteries n'est pas envisageable du fait de leur possible disparité.

Selon un mode de réalisation, le circuit de régulation de la charge d'une batterie est alimenté en courant continu. Ces circuits de régulation sont alimentés avantageusement pour une tension de 12 V ou 24 V continue identique à celle utilisée pour les prises alume-cigares voitures ou camions.

De nombreux circuits existants sont aptes à être utilisés pour charger les deux types de batteries utilisés notamment par les téléphones cellulaires, à savoir les batteries Ni-Mh (nickel hydrure métallique) et les batteries Li-ion (batteries à base de lithium) qui se rechargent de manière différente. Ce circuit de régulation, alimenté par une tension continue 41 peut notamment être le LT510 de LINEAR TECHNOLOGY ou encore le MAX 1648 de MAXIM.

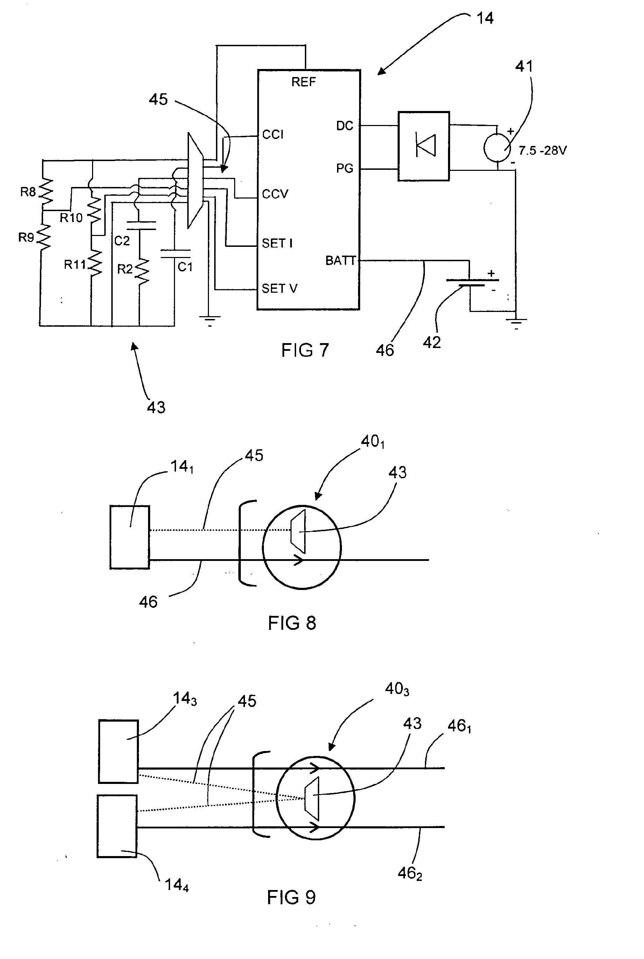

Tel qu'illustré à la figure 7, un composant existant est utilisé dans un circuit de régulation où l'on retrouve la batterie 42 de l'appareil à recharger et l'alimentation 41 continu. Le circuit de régulation 14 présente en outre des résistances R₂, R₈, R₉, R₁₀, R₁₁ et des condensateurs C₂, C₃, connectés à des pattes de configuration dudit composant, et notamment à la patte CCI (compensation de la boucle de régulation en courant), à la patte CCV (compensation de la boucle de régulation en tension) à la patte SETV (boucle de régulation en tension) et à la patte SETI (boucle de régulation en courant). Le composant est configuré de telle façon que le choix des valeurs des résistances et des capacités permet notamment de régler l'intensité nominale et la tension nominale de charge.

Ainsi, selon un mode de réalisation, les moyens 43 pour spécifier les caractéristiques de charge d'undit appareil sont constitués par des composants électriques passifs, à savoir au moins une résistance R₂, R₈, R₀, R₁₀, et/ou au moins un condensateur C₂, C₃.

Ainsi les moyens de connexion 40₁, 40₂, 40₃, auxdits moyens de régulation 14₁ ,14₂ ,14₃ ,14₄ présentent une connectique constituée de résistances et/ou de condensateurs.

Cette connectique présente des liaisons électriques 45 reliant les moyens 43 et notamment lesdits composants électriques passifs auxdites pattes de configuration du composant. Cette connectique présente, de plus, au moins une ligne d'alimentation électrique 46, 46₁, 46₂ à undit appareil à charger.

Lorsque les moyens de connexion sont connectés aux moyens de régulation, lesdits composants électriques passifs complètent le circuit de régulation tel que notamment illustré à la figure 7. Lorsque les moyens de distributions sont déconnectés, les composants sont déconnectés du circuit de régulation 14 faisant partie de la connectique desdits moyens de connexions 40₁, 40₂, 40₃.

Selon un mode de réalisation, tel qu'illustré à la figure 6, le ledit chargeur est apte à traiter en même temps une pluralité d'appareils à batterie rechargeable à paramètres de charge différents, ledit chargeur présentant une pluralité de moyens 22, 24₁, 24₂ de distribution électrique munis chacun de moyens 40₁ ,40₂, 40₃ de connexion auxdits moyens de régulation 14₁, 14₂, 14₃, 14₄, chacun desdits moyens 22, 24₁, 24₂ de distribution de l'énergie électrique étant muni en outre de moyens de connexion spécifiques ou adaptables à un appareil particulier, ledit chargeur présentant pour chacun desdits moyens 22, 24₁,24₂ de distribution de l'énergie électrique des moyens 43 pour spécifier les caractéristiques nécessaires de la charge.

Avantageusement, tel qu'illustré à la figure 6, un premier cordon 24₁ permet de charger une batterie dont la tension nominale de charge est de 5 V et dont le courant nominal de charge est de 350 milli-ampères, ces caractéristiques étant définies par les composants et notamment les résistances et/ou les condensateurs intégrés dans la connectique 40₁.

Le cordon 24₂ permet quant à lui de recharger une batterie dont la tension nominale de charge est de 3,6 V et dont le courant nominal de charge est de 550 milli-ampères, ces caractéristiques étant définies dans la connectique 40₂ au moyen de résistances et/ou de condensateurs.

Tel qu'illustré à la figure 6, un cordon double peut alimenter deux appareils identiques dont la tension nominale de charge est de 2V et le courant nominal de charge est de 450 milli-ampères, ces caractéristiques étant définies dans les composants électriques passifs intégrés dans la connectique 40₃.

Selon un mode de réalisation, dans le cas d'une prise secteur, les circuits de régulation 14₁, 14₂, 14₃, 14₄ sont alimentés en parallèle par un même transformateur permettant d'abaisser la tension secteur et un même circuit redresseur permettant de transformer un courant alternatif en un courant continu.

Avantageusement, par mesure de sécurité, un cordon adapté pour des caractéristiques de charge particulières, définies par ses moyens 43 de spécification des caractéristiques nécessaires de la charge, ne sera compatible, par le biais de ces moyens de connexion 3, 3', qu'avec des appareils présentant ces mêmes caractéristiques de charge particulières.

A titre d'exemple, la figure 1 illustre un chargeur dont les moyens de branchement 1 sont une prise secteur 11 française. Il pourrait également s'agir d'une prise secteur américaine, anglaise, ou autre. Ce chargeur est muni d'un cordon électrique 22 présentant deux moyens de connexion 3 placés en parallèle. Les moyens de connexion 3 présentent des embouts spécifiques 31 à un modèle d'appareil électrique donné ou à deux appareils électriques différents.

A la figure 2, le chargeur est muni non pas d'une prise secteur mais d'une prise de type allume-cigares 12. De plus, le cordon est un cordon en spirale 23.

A la figure 3, la chargeur présente une prise secteur 11 et deux cordons électriques 24 de distribution de l'énergie électrique. Ces cordons électriques 24 se terminent par des moyens de connexion 3' qui se présentent sous la forme d'un embout dit standard 32.

A cet embout standard 32, on peut associer divers adaptateurs 33 correspondant à autant d'appareils électriques particuliers. Par exemple, les adaptateurs 33 présentent une première partie coopérant avec l'embout standard 32 et une seconde partie spécifique, coopérant avec un appareil électrique particulier.

Les cordons électriques sont prévus clipsables ou branchables, sur les moyens de régulation des caractéristiques de charge. Ainsi, lorsqu'on dispose uniquement de cordons 24 se terminant par des moyens de connexion 3 spécifiques, il est possible de débrancher ledit cordon et d'en brancher ou clipser un autre, spécifique d'un autre appareil électrique.

On aboutit ainsi, conformément au but de l'invention, à des chargeurs multiples universels.

Ainsi, au cours d'un voyage, il suffit de transporter un seul chargeur, éventuellement avec les adaptateurs adéquats, de dimensions réduites, pour pouvoir recharger l'ensemble des appareils électriques que l'on emmène avec soi.

Par ailleurs, de tels chargeurs peuvent être proposés à l'usage de leurs clients, par les restaurants, hôtels et autres, amenés à recevoir des voyageurs.

Selon une autre variante, non illustrée, les moyens 1 de branchement à une alimentation électrique se présentent sous la forme d'un socle, par exemple sphérique, sur la surface duquel est distribuée une pluralité de prises femelles de type clipsables ou branchables à des moyens de régulation de la charge. Ledit socle est muni d'une prise électrique mâle, destinée à être connectée à une prise électrique femelle murale par exemple.

Les prises électriques femelles distribuées à la surface dudit socle sont aptes à recevoir lesdits moyens 2 de distribution de l'énergie électrique grâce à des moyens de connexion mâles audits moyens de régulation, lesdits moyens de connexion 40 présentant en outre des moyens 43 pour spécifier les caractéristiques nécessaires de la charge. Les moyens de distribution sont par exemple des cordons électriques 22, 23, 24 munis notamment desdits moyens de connexion 40 d'une prise mâle clipsable ou branchable et d'un embout spécifique 31 à un appareil particulier.

Un tel socle pourra être fort utile pour les salles de réunion, chaque participant pouvant mettre en charge son téléphone portable et/ou son ordinateur portable notamment.

Naturellement, d'autres modes de mise en oeuvre, à la portée de l'homme du métier, auraient pu encore être envisagés, sans pour autant sortir du cadre de l'invention.

## Revendications

1. Chargeur pour appareil électrique à batterie rechargeable, notamment téléphones cellulaires, ordinateurs portables ou autres, comprenant :
- des moyens (1) de branchement à une alimentation électrique,
- des moyens de régulation (14, 14₁, 14₂, 14₃, 14₄) des paramètres de charge d'au moins undit appareil,
- des moyens de distribution (2) de l'énergie électrique à au moins undit appareil, muni de moyens de connexion (40₁, 40₂, 40₃) auxdits moyens de régulation et de moyens de connexion (3, 3') spécifiques ou adaptables à un appareil particulier,
**caractérisé en ce que** lesdits moyens de connexion (40₁, 40₂, 40₃) auxdits moyens de régulation (14, 14₁, 14₂, 14₃, 14₄) présentent en outre des moyens (43) pour spécifier les paramètres nécessaires de la charge d'au moins undit appareil auxdits moyens de régulation en fonction dudit au moins un appareil connecté.

2. Chargeur selon la revendication 1, **caractérisé en ce que** les moyens de régulation sont constitués pour chaque appareil connecté d'un circuit de régulation (14) de charge d'une batterie.

3. Chargeur selon la revendication 2, **caractérisé en ce que** les moyens (43) pour spécifier les paramètres nécessaires de la charge dudit au moins un appareil connecté sont constitués par des composants électriques passifs, à savoir au moins une résistance (R2, R8, R9, R10, R11) et/ou au moins un condensateur (C2, C3) complétant le circuit de régulation (14).

4. Chargeur selon la revendication 1, **caractérisé en ce que** les paramètres nécessaires de la charge sont l'intensité nominale et la tension nominale de charge de la batterie rechargeable dudit appareil.

5. Chargeur selon la revendication 4, **caractérisé en ce que** le circuit de régulation de la charge d'une batterie est alimenté en courant continu.

6. Chargeur selon la revendication 1, **caractérisé en ce que** les moyens de distribution (2) sont constitués par au moins un cordon (22, 23, 24) électrique.

7. Chargeur selon la revendication 1, **caractérisé en ce que** les moyens (3) de connexion à un appareil se présentent sous la forme d'un embout spécifique (31) à un appareil particulier.

8. Chargeur selon la revendication 1, **caractérisé en ce que** les moyens (3') de connexion à un appareil se présentent sous la forme d'un embout standard (32) associé à un adaptateur (33) correspondant à un appareil particulier.

9. Chargeur selon la revendication 4, **caractérisé en ce que** ledit chargeur est apte à traiter en même temps une pluralité d'appareils à batterie rechargeable à paramètres de charge différents, ledit chargeur présentant une pluralité de moyens (23, 24₁, 24₂) de distribution électrique munis chacun de moyens (40₁, 40₂, 40₃) de connexion auxdits moyens de régulation (14₁, 14₂, 14₃, 14₄), chacun desdits moyens (22, 24₁, 24₂) de distribution de l'énergie électrique étant muni en outre de moyens de connexion spécifiques ou adaptables à un appareil particulier, ledit chargeur présentant pour chacun desdits moyens (22, 24₁, 24₂) de distribution de l'énergie électrique des moyens (43) pour spécifier les paramètres nécessaires de la charge.

10. Chargeur selon la revendications 5, **caractérisé en ce que** ledit chargeur présente des moyens pour transformer et abaisser une tension secteur à courant alternatif en une tension abaissée à courant continu pour alimenter au moins un circuit de régulation de la charge d'une batterie.
